(19)

Europäisches
Patentamt
European
Patent Office
Office européen
des brevets

(11) **EP 2 889 818 A1**

(12) **EUROPEAN PATENT APPLICATION**

(43) Date of publication:
**01.07.2015 Bulletin 2015/27**

(51) Int Cl.:
***G06Q 10/06*** *(2012.01)*

(21) Application number: **14152574.1**

(22) Date of filing: **25.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.12.2013 IT RM20130723**

(71) Applicant: **Cacciotti, Angelo**
**00133 Rome (IT)**

(72) Inventor: **Cacciotti, Angelo**
**00133 Rome (IT)**

(74) Representative: **Zizzari, Massimo**
**Studio Zizzari**
**P.le Roberto Ardigò, 42**
**00142 Roma (IT)**

(54) **Computer system and related process supporting the acquisition, registration and transmission, by a mobile device, of data related to the motion of a vehicle, to the geolocation and to the driving behaviors**

(57) Computer system (100) and related process supporting the acquisition, registration and transmission, by a mobile device, of data related to the motion of a vehicle, to the geolocation and to the driving behaviours, said system characterized in that comprising:
- at least a *central PC* (106), placed at a national Head-quarter (102), providing acquisition of data and/or requests of intervention sent automatically or by user through mobile devices and further providing the despatching of said requests of intervention towards the proper service centres placed in the national territory;
- a set of mobile devices, preferably represented by smartphones (105), portable personal computers (108) or tablet PCs (107), each of them belonging to a registered user, providing acquisition, registration and transmission of data related to the motion of a vehicle, such as velocity and acceleration, to the geolocation by GPS coordinates and to the driving behaviours;
- at least a *server* (103), having a database providing acquisition, storage and retrieval of information saved, or forwarded, by said mobile devices;
- a computer or telecommunication network (104), providing the direct communication of said mobile devices with said *central PC* (106) and said *server* (103), so that a request of intervention can be sent automatically from said mobile devices to said national Head-quarter, using a specific algorithm, in order to transmit further data by a direct and continuous communication between said mobile devices, said *central PC* and said *server*.

Fig. 1

## Description

The present invention concerns a computer system and related process supporting the acquisition, registration and transmission, by a mobile device, preferably represented by smartphones, portable computers or tablet PCs, of data related to emergencies and/or road accidents and/or driving dynamics.

These activities are especially related to emergencies, when it is necessary a prompt intervention of the emergency services, but the user cannot send voluntarily a request for help.

In particular, these situations may occur when a user gets involved, for example, with a road accident and he/she is not able to send autonomously a request for help, because he is injured and suffering or even because he lost consciousness.

When this happens, of course, depending on the seriousness of the road accident, time factor is particularly critic, because a quick arrival on site of emergency services can save the lives of people involved in the accidents. In particular, if said road accident happens on a desert road, or anyway where it is not frequent to have people walking or driving there, people involved in that accident may not be able to call for help, and may also be waiting for a long time before an emergency call is sent by someone else, resulting in delay of intervention of emergency services.

Furthermore, emergency conditions and requests for help can also be related to other kinds of situations that may occur to everyone, not necessarily a car driver.

For example, it can be considered the case in which a person is jogging or having a walk in a rarely visited park and he/she is attacked by disturbed people; or even in case of bus drivers or taxi drivers getting involved in dangerous events, being attacked by thieves or criminals.

Emergency conditions can also occur if somebody gets lost and cannot be found by his/her relatives, for example a child, an aged person or a minor. In particular, in case of people afflicted with specific diseases, for example Alzheimer's disease or similar degenerative dementia diseases, or also in case of old people with loss of memory not able to come back after having left their home, or also in case of children not coming back home after school or even going away without any message.

This invention concerns data acquisition and automatic warning reception, sent through the use of mobile devices, for example smartphones, to a national Head-quarter, that operates at a national level and that can collect the intervention requests coming from all the territory, and that contacts said mobile devices users, verifying emergency situations and asking services in charge for a possible intervention.

In particular, the national Head-quarter may require emergency services intervention such as ambulances or medical assistants, and police officers in case a user is being attacked, or even qualified operators providing the re-establishment of normal road conditions, through cleaning and maintenance of road platform and related parts, through aspiration and collection of liquids and other polluting materials, eventually lost by vehicles, after car accidents.

Furthermore, after a car accident, people involved, according to the current regulations, have to send a notification to their Insurance Company that then collects the largest possible quantity of information, through the use of data provided by people involved and possible witnesses.

Insurance Companies need this information to reconstruct events and accident dynamics, to verify responsibilities and proceed with compensations according to the event reconstruction.

As known, in the state of the art, some solutions exist considering a car-mounted *black box,* able to detect and record data such as velocity, deceleration and position and providing additional information related to the moments immediately preceding the car accident.

This device provides an actual recording of the accident dynamics so that a reconstruction, as accurate as possible related to the moments preceding the car accident, can be performed.

However all the solutions from prior art have a certain number of drawbacks, in example:

- first of all, current systems for intervention request, both in case of car accident and in case of attack to a person, consider a voluntary dispatch of this request sent by the same person involved, and these systems are not able to send an automatic request to the national Head-quarter, which is in charge for coordinating and dispatching this request to proper services, resulting in delayed intervention;
- furthermore, a reconstruction of car accident dynamics can be made just through witnesses and attached post-accident technical investigation and photos, while all data concerning moments before the accident can only be supplied through car-mounted *black boxes*; nevertheless, additional costs are associated to these *black* boxes, both for purchasing hardware devices, and for installation and dismantling on board.

The present invention considers that, when a request for intervention is sent to the national Head-quarter automatically, through a software able to recognize the occurring of a car accident and installed within the operative system of a mobile device like a smartphone, a portable computer or a *tablet PC,* arrival time of emergency services could be considerably decreased, allowing a fast intervention of the rescue team, even if drivers have lost consciousness.

Furthermore the present invention is based on the observation that when a software with an embedded algorithm is able to activate an automatic warning to a national Head-quarter in case a user is in danger, allowing a video and audio streaming communication to said national Head-quarter, the national Head-quarter could coordinate and manage emergency services intervention, also providing a geolocation of the device sending the request, resulting in a useful function even in case a person couldn't be found in any other way.

Furthermore, especially in order to reconstruct an accident, the automatic acquisition of data related to conditions preceding a car accident, essential for the following insurance refund, would assure a real reconstruction of the same accident, allowing Insurance Companies to combat insurance frauds arising from strange dynamics, or from overestimation of damages and/or accidents that never occurred, with no misunderstandings or wrong interpretations, and even avoiding additional costs for both purchasing hardware devices and for on board installation. This would permit Insurance Companies to manage faster their work and also a realistic point of view of the accident and damages in vehicles, instead of surveys and reports made by professionals in the following days.

Furthermore, registration of data related to driving behaviours, at regular time intervals would permit, subject to user authorization, the delineation of a so called driving profile. Through the delineation of the driving behaviours, Insurance Companies could assign users in specific categories and apply a discount on the insurance contract to the ones having a proper driving behaviour, resulting in evident benefits for the same users.

Furthermore, said software not only could record safely acquired data within a mobile device, in a specific memory of the data storage not alterable by users, but would also ensure the encoding and the real time dispatch to the national Head-quarter of this data, through the use of a specific algorithm developed by the company introducing the present invention, ensuring security and inalterability, function that is not possible with a *black box* because data always stays within it.

Finally, said software, detecting in real time the vehicle position through GPS coordinates and receiving, by means of an internet connection, information about particularly dangerous roads, could give the driver a audio-visual warning in case he/she approaches sites having a high frequency of accidents, through a specific algorithm comparing said information with current position.

Therefore, the main objective of the present invention is to propose a computer system and related process supporting the acquisition, registration and transmission, by a mobile device, of data related to the motion of a vehicle, to the geolocation and to the driving behaviours.

Another objective of the present invention is to provide a computer system able to send autonomously an intervention request to a national Head-quarter, by means of a software that is able to recognize autonomously the occurring of a car accident.

Another further objective is to send, in case the user is in danger, for example in case he/she is being attacked by disturbed persons, an automatic warning to a national Head-quarter that is responsible to contact the user and to verify what is the problem, furthermore allowing the transmission of audio-visual data towards said national Head-quarter, so that the same Head-quarter can forward the warning to proper services, demanding, if necessary, the intervention of Police officers.

A further objective is to provide a concrete support for traceability of people afflicted by neuro-degenerative diseases, of children and anyway people not able to find the way back home autonomously.

Another objective is to provide acquisition, at regular time intervals and subject to user authorization, of information and data related to driving behaviours, in order to define driving behaviours for the delineation of a so called driving profile.

Another further objective is to have a tool absolutely similar to current car-mounted *black boxes,* that permits real discounts when signing insurance contracts, and at the same time allowing user to avoid additional payment for purchasing, installation and management of additional equipment.

Another objective is to safely preserve acquired data, during all process phases: from collecting, to storage, from encrypting to dispatch by means of specific code, until national Head-quarter receives and stores data, using high reliable technology.

A further objective is to reconstruct the accident dynamics exactly, with consequent benefits for Insurance Companies, that can detect possible unfair behaviours of users, and to combat therefore insurance frauds.

Finally another further objective is to give the driver a audio-visual warning when approaching sites having high frequency of accident, for example by means of vibration and related visual warning on the screen of a mobile device, in order to increase the attention level, avoiding possible new car accidents.

Therefore, it is specific subject of the present invention a computer system and related process supporting the acquisition, registration and transmission, by a mobile device, of data related to the motion of a vehicle, to the geolocation and to the driving behaviours, said system characterized in that comprising:

- at least a *central PC,* placed at a national Head-quarter, providing acquisition of data and/or requests of intervention sent automatically or by user through mobile devices and further providing the despatching of said requests of intervention towards the proper service centres placed in the national territory;
- a set of mobile devices, preferably represented by smartphones, portable personal computers or tablet PCs, each of them belonging to a registered user, providing acquisition, registration and transmission of data related to the motion of a vehicle, such as velocity and acceleration, to the geolocation by GPS coordinates and to the driving behaviours;

- at least a *server*, having a database providing acquisition, storage and retrieval of information saved, or forwarded, by said mobile devices;
- a computer or telecommunication network, providing the direct communication of said mobile devices with said central PC and said server,

so that a request of intervention can be sent automatically from said mobile devices to said national Head-quarter, using a specific algorithm, in order to transmit further data by a direct and continuous communication between said mobile devices, said central PC and said *server.*

The present invention will now be described for illustrative but not limitative purposes, according to its preferred embodiments, with particular reference to figures of the enclosed drawings, wherein:

figure 1 is a schematic view of a general architecture related to a computer system for acquisition, registration and transmission, by a mobile device, of data related to car accidents, driving dynamics and emergency situations;

figure 2 is a schematic view of an internet website, suitable for users registration to said communication service and delineation of a driving profile;

figure 3 is a schematic view of a mobile device application, working as interface for an intervention request and/or data transmission according to three possible communication ways: sending an SMS text message, voice call, digital data transmission; said interface gives also the opportunity to activate a service for traceability and delineation of driving behaviours defined as driving profile;

figure 4 is a flow chart related to data acquisition process and automatic dispatch of a warning to the national Head-quarter by said computer system, following a car accident;

figure 5 is a schematic view of an application screenshot for mobile devices, with some values related to data collected by said computer system (GPS coordinates for position, velocity and acceleration);

figure 6 is a schematic view of an application screenshot for mobile devices with data packages collected during high frequency sampling;

figure 7 is a schematic view of three directions along which a three-axis accelerometer installed inside each mobile device detects the three acceleration scalar values during each sample;

figure 8 is a flow chart related to a communication process through textual chat;

figure 9 is a flow chart related to a communication process through a device-user association modality with related traceability of user position;

figure 10 is a flow chart related to a communication process through a device-user association modality with intervention request by means of a keyword.

It is here underlined that, in the following, only some of the many conceivable embodiments of the present invention will be described, and that they are just some particular examples that do not introduce any limitations, having the possibility to describe many other embodiments based on the disclosed technical solutions of the present invention.

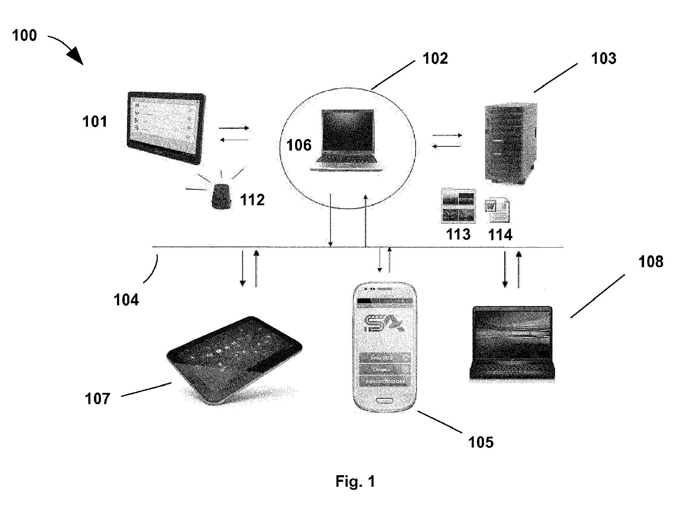

In figure 1 it is illustrated the general architecture of a computer system 100 for acquisition, registration and transmission, by a mobile device preferably represented by smartphones 105, portable personal computers 108 or tablet PCs 107, of data related to the motion of a vehicle, to the geolocation and to the driving behaviours, said mobile device owned by a registered user, located somewhere in the national territory.

Mobile devices enable to send an intervention request and to transmit data are exclusively those which users, already registered, use to access, through a direct method of insertion of information on a website, with acquisition of an activation code, or through an indirect process if the same operations are performed by an intermediate person, in example an Insurance Agent.

This system, in particular, comprises an operative Head-quarter 102, that receives all intervention requests coming from all the national territory. The requests are received directly through a central PC 106 of the operative Head-quarter 102, connected by means of a computer network or a telecommunication network 104, to said mobile devices.

This computer system 100 comprises at least a *server* 103, having a database providing acquisition, storage and retrieval of information and data 113, 114 saved, or forwarded, by said mobile devices, such as position, velocity, acceleration, audio e video data streaming.

Furthermore this system 100 comprises a set of computers 101 belonging to operators located in nationwide sites, so that the operative Head-quarter 102 can quickly dispatch information and directives, in order to send said operators on sites, following an intervention request 112.

Automatic intervention request service and/or transmission of data related to car accidents and/or emergency situations, is embedded by an application software, called *App,* directly downloaded from *internet* and installed by the user in his own mobile device. The use of said *App* is included in a set of services provided by the so called Service Card®, according to the subscription available for users, and provided by company Sicurezza & Ambiente S.p.A. for assistance related to a car accident.

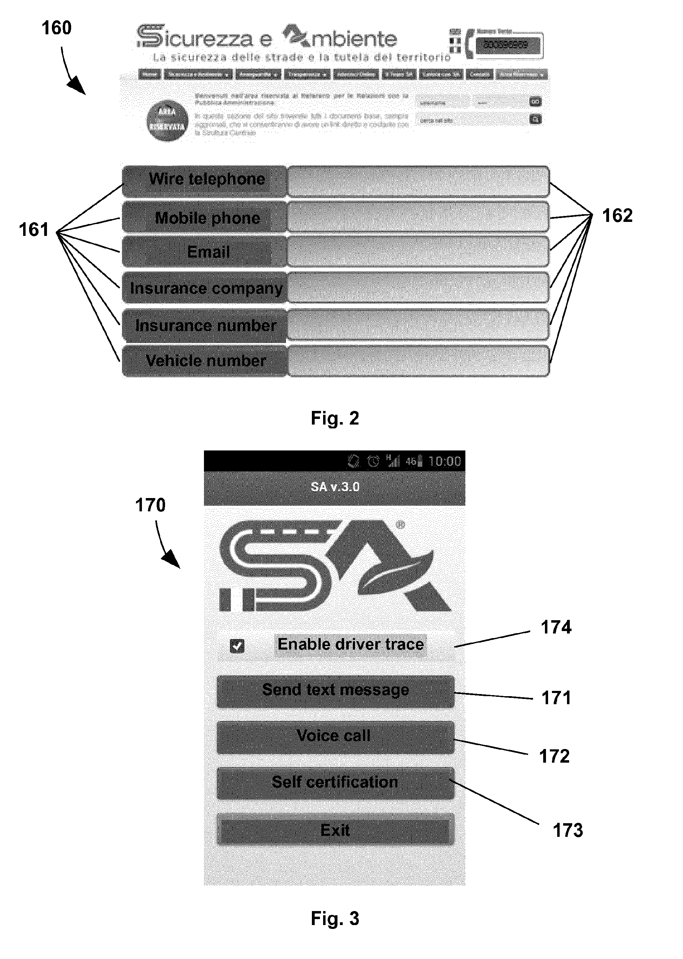

Subscription can be activated logging on a specific website 160, as illustrated in figure 2, in example *www.sicurezzaeambientespa.com,* and filling up fields 161 with identification data 162, in example: telephone number, mobile phone number, *e-mail address*, Insurance Company, contract number and vehicle number plate.

When the registration process is complete, it is automatically generated an identification code univocally associated to user. It is the activation code of the *App* installed inside the mobile device, and it also permits to associate directly user information to every request or to each automatic record generation - in example: trace of a driving profile, accident sheet, operators intervention sheet, etc.

In figure 3 it is illustrated an example of a user interface screenshot 170 belonging to the *App* installed and activated on a mobile phone. We can see basically four different virtual buttons 171, 172, 173 e 174 depending on which function the user wants to activate in that situation: text message (button 171), voice call (button 172), digital data transmission - in example: informative sheets, photos, identification data, etc. (button 173), trace of a driving profile (button 174).

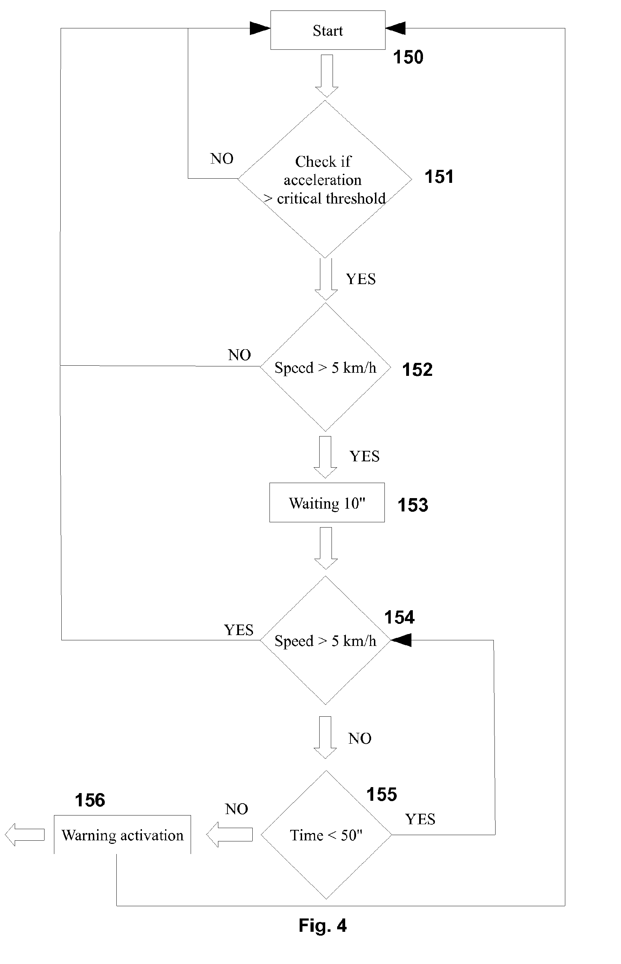

Referring to figure 4, said *App* embeds a specific algorithm for automatic sending a warning to the operative Head-quarter, with a high frequency sampling of acceleration and velocity values in order to detect a car accident. Said *App* only stores significant warnings, corresponding with significant acceleration/deceleration values, suitable to detect the occurring of a car accident. In particular said *App* compares the acceleration value detected by an accelerometer installed within the mobile device, with a "critical" threshold saved in the *software* memory 151. In case of matching, said *App* instantly verifies if vehicle speed is over 5 km/h by means of two different check cycles, first one after 10 seconds, 152 and 153, and the other one after 50 seconds 154 and 155. Therefore if the vehicle speed is lower than 5 km/h within 60 seconds after the critical occurring of significant acceleration/deceleration change, the *App* sends recorded data to a specific *server*, subdividing them in warning packages and including also values related to velocity and position. Said algorithm is particularly important because it avoids a warning to be launched in case of sudden motion of the mobile device, when vehicle is not moving, or in case of sudden braking when vehicle is moving.

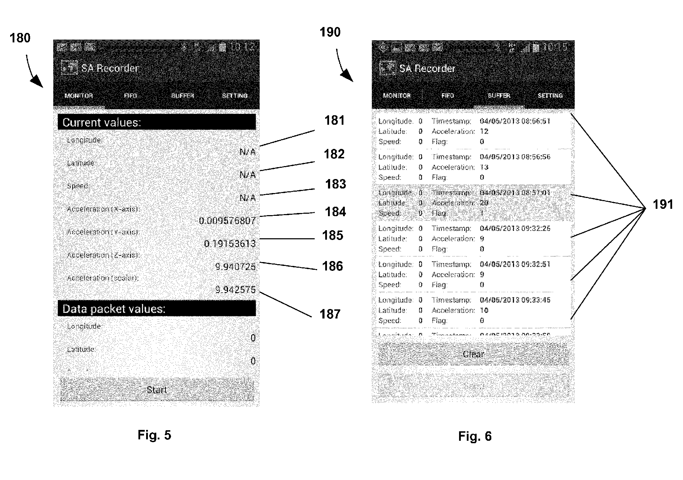

In figure 5 it is illustrated an example of user interface screenshot 180 belonging to the *App* installed and activated on the mobile phone. In particular, we can notice values related to position just detected and recorded by the mobile device, through longitude 181 e latitude 182 coordinates, velocity 183, three acceleration values according to three spatial coordinates 184, 185, 186 and the scalar value of acceleration 187.

In figure 6 it is illustrated a screenshot 190 belonging to said *App,* in which data packages 191 are shown collected during high frequency sampling. Principle followed in realization, aims not to fill excessively data storage of the mobile device in order not to overload logical operation and on the other hand to restrict as possible sending of saved packages (*warning packages*) to central collecting systems. Intervention request of an operator is sent by the computer system in case user demands it through pressure on a button of three already described in a previous version of the App illustrated in patent application number RM2012A000611, or in case 60 seconds passed since acceleration/deceleration threshold has been exceeded, without any answer by user. User may also decide if saved data can be automatically sent, in addition to cases above illustrated, once over 60 minutes have passed since last sending or at regular time intervals, for tracing driving profile. These optional settings are needed just once and are maintained even in case the mobile device turns off.

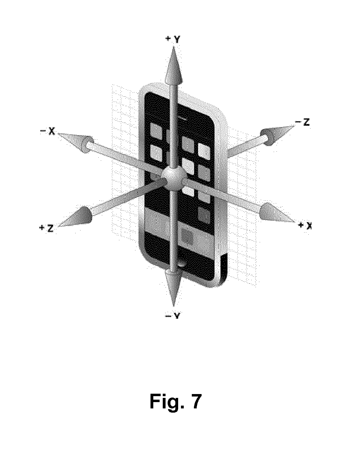

We underline how data recording is independent from the position of the mobile device inside car cockpit. Accelerometer used by said *App* is indeed a three-axis accelerometer so it provides during every sampling, three scalar values along three spatial directions, as illustrated in figure 7. Recorded acceleration value is the module of vector which components are three said scalar values and it can be calculated according to following classic formula:

$$\sqrt{Ax^2 + Ay^2 + Az^2} \ .$$

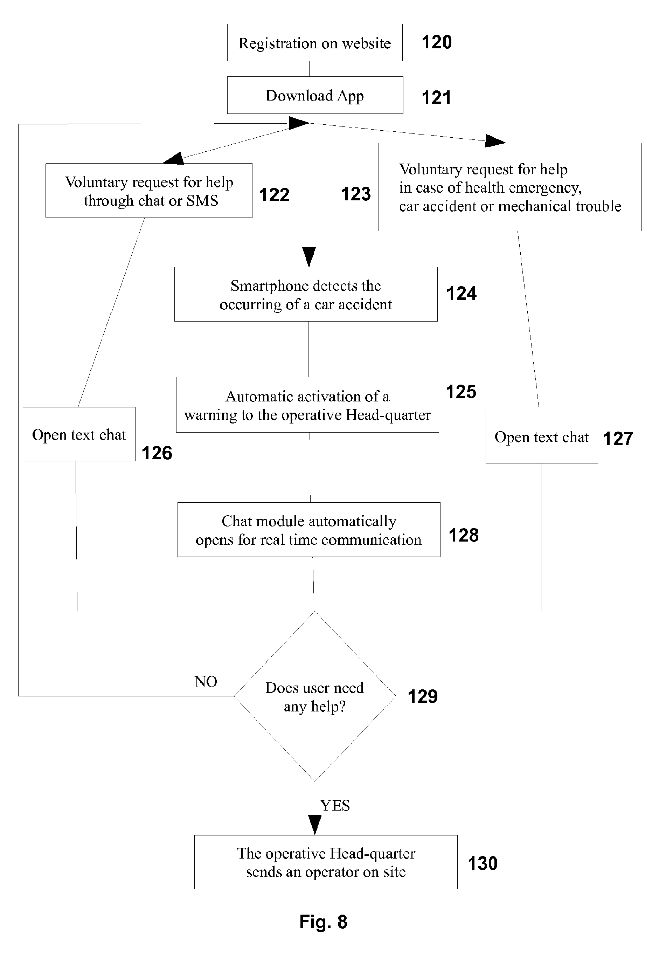

In figure 8 it is illustrated a flow chart related to a specific embodiment of the invention with the possibility to access every function through a graphic interface. In particular, after registration on the website 120 and *download* of said *App* 121, through pressure on virtual buttons on the mobile device screen, the user can send an intervention request to the operative Head-quarter through a text chat or SMS 122, or again just pressing one of the specific virtual buttons 123 for a request for help in case of health emergency, car accident or mechanical trouble. Furthermore, through an algorithm embedded by a software and illustrated in figure 4, said *App* is able to automatically detect a car accident 124, sending an automatic warning to the operative Head-quarter 125. A chat module 128 is also open, for real time communication through computer network with the same operative Head-quarter, that verifies if user needs help and an operator intervention on site.

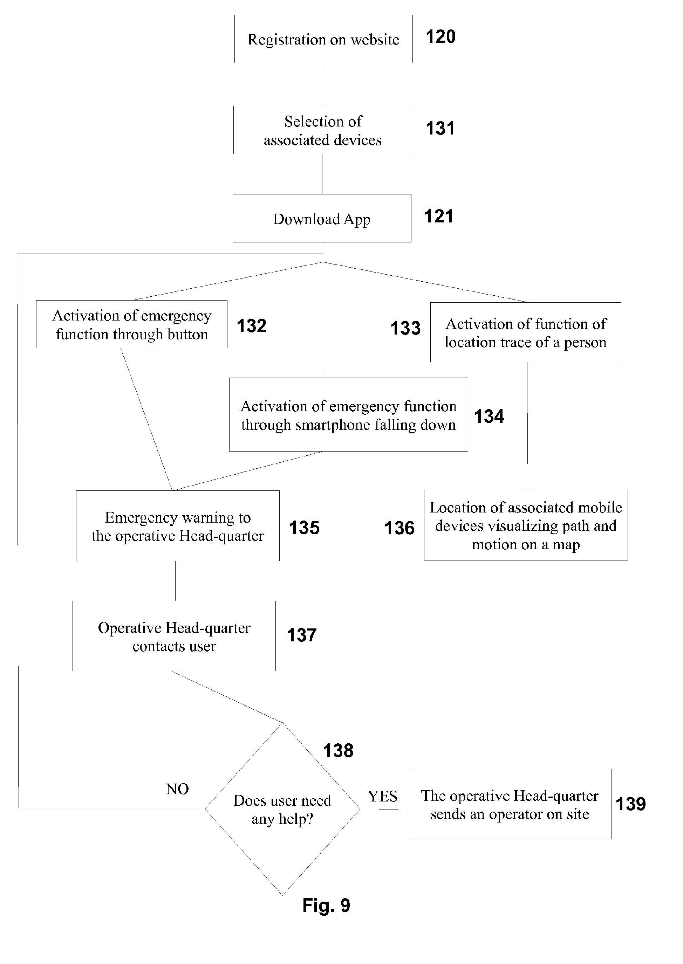

In figure 9 it is illustrated another flow chart related to a further embodiment of the present invention. In particular, during registration 120 and download of the *App* 121, associated mobile devices 131 can be specified through an identification code. Activation of the function of location trace of a person 133, provides the localization of the associated device, visualizing path and motion on a map 136. In particular, the data processing unit provides the processing of the GPS data coordinates, sent from the mobile device to be located, so that the *App* can visualize on the screen of the mobile device the position and the motion on the map. An emergency request function 135 towards said national Head-quarter is further available, by using a virtual button 132 placed on the screen or just by making the mobile device to fall down; in the latter case, the software detects the peak deceleration values detected by the accelerometer, that can occur exactly when the same device falls down to ground, and it is able to generate and send automatically a warning communication to said national Head-quarter, that contacts the user back 137 and if necessary sends an operator on site 139.

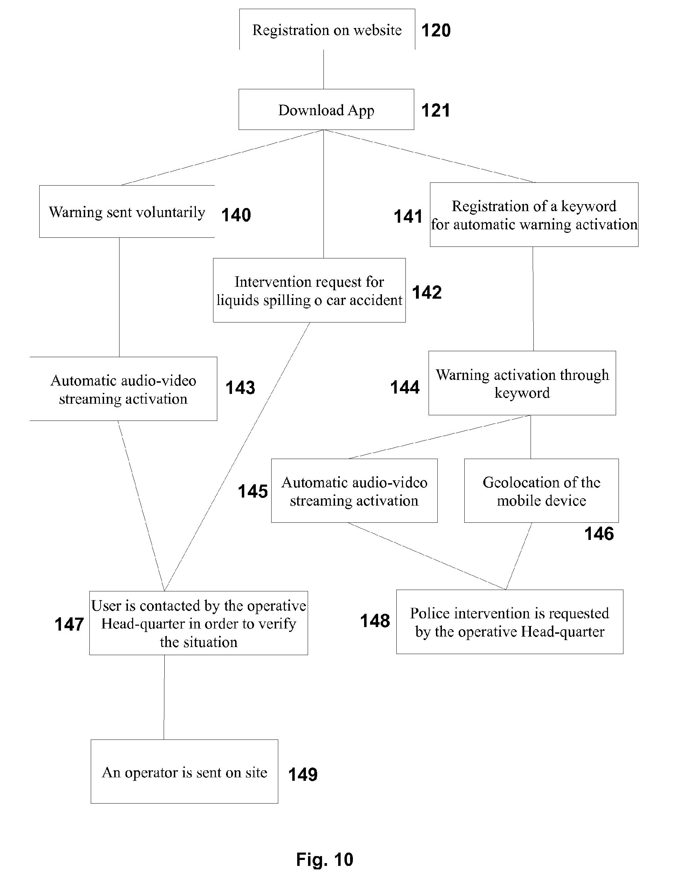

In figure 10 it is finally illustrated a flow chart related to a further embodiment of the invention. It not only provides an intervention function in example following a car accident 142 for cleaning of road platform, through aspiration of liquids and other materials lost by vehicle involved, but also permits to start an automatic audio and video communication 143 to the operative Head-quarter following a warning sent through virtual button 140.

Furthermore it is possible the saving of a keyword 141, by using a microphone connected to a voice recognition device, able to encode a profile of voice and said word, saving data in a database contained inside the memory of said mobile device. An algorithm embedded in the same *App* detects voice and said words with a high frequency and by using the same microphone installed on said mobile device, providing a matching of previously saved data inside said database.

In case of positive matching, the following operation provides an audio/video communication 145 and a geolocation of said device 146 towards said national Head-quarter, so that a prompt reaction of the operators working in the national Head-quarter can be provided, either in case of the user being attacked, and the situation can be immediately checked and the intervention of the Police can be requested, at the same time the multimedia contents (audio and video) sent during the emergency are geolocated and saved in a central database, providing a further use as a evidence of what happened.

Therefore, the above examples show that the present invention achieves all the proposed objectives.

In particular, it proposes a computer system and related process supporting the acquisition, registration and transmission, by a mobile device, of data related to the motion of a vehicle, to the geolocation and to the driving behaviours.

Then, the same invention proposes a computer system able to send autonomously a request of intervention to a national Head-quarter, by means of a software that is able to recognize autonomously the occurring of a car accident.

Again, the present invention provides a computer system able to send, in case the user is in danger, for example in case he/she is being attacked by disturbed persons, an automatic warning to a national Head-quarter that is responsible to contact the user and to verify what is the problem, furthermore allowing the transmission of audio-visual data towards said national Head-quarter, so that it can forward the warning to proper services, demanding, if necessary, the intervention of Police officers.

Furthermore the present invention permits to provide a concrete support for traceability of people afflicted by neuro-degenerative diseases, of children and anyway people not able to find the way back home autonomously.

Again the present invention permits to provide acquisition, at regular time intervals and subject to user authorization, of information and data related to driving behaviours, in order to define driving behaviours for the delineation of a so called driving profile.

Then the present invention permits to have a tool absolutely similar to current car-mounted black boxes, that permits real discounts when signing insurance contracts, and at the same time allowing user to avoid additional payment for purchasing, installation and management of additional equipment.

Again the present invention permits to safely preserve acquired data, during all process phases: from collecting, to storage, from encrypting to dispatch by means of specific code, until national Head-quarter receives and stores data, using high reliable technology.

Furthermore the present invention permits to reconstruct accidents dynamics exactly, with consequent benefits for Insurance Companies, that can detect possible unfair behaviours of users, and therefore to combat insurance frauds.

Finally, the present invention permits to give the driver a audio-visual warning if approaching sites having high frequency of accidents, for example by means of vibration and related visual warning on the mobile device, in order to increase the attention level, preventing possible car accidents.

The present invention has been described for illustrative but not limitative purposes, according to its preferred embodiments, but it is clear that modifications and/or changes can be introduced by those skilled in the art without departing from the relevant scope, as defined in the enclosed claims.

**Claims**

1.  Computer system (100) and related process supporting the acquisition, registration and transmission, by a mobile device, of data related to the motion of a vehicle, to the geolocation and to the driving behaviours, said system **characterized in that** comprising:

    - at least a *central PC* (106), placed at a national Head-quarter (102), providing acquisition of data and/or requests of intervention sent automatically or by user through mobile devices and further providing the despatching of said requests of intervention towards the proper service centres placed in the national territory;
    - a set of mobile devices, preferably represented by smartphones (105), portable personal computers (108) or tablet PCs (107), each of them belonging to a registered user, providing acquisition, registration and transmission of data related to the motion of a vehicle, such as velocity and acceleration, to the geolocation by GPS coordinates and to the driving behaviours;
- at least a *server* (103), having a database providing acquisition, storage and retrieval of information saved, or forwarded, by said mobile devices;
- a computer or telecommunication network (104), providing the direct communication of said mobile devices with said central PC (106) and said *server* (103),

so that a request of intervention can be sent automatically from said mobile devices to said national Head-quarter, using a specific algorithm, in order to transmit further data by a direct and continuous communication between said mobile devices, said central PC and said *server.*

2. Process supporting the acquisition, registration and transmission, by a mobile device, of data related to the motion of a vehicle, to the geolocation and to the driving behaviours, said process **characterized in that** comprising:

- a preliminary registration of a user (120), by providing a specific information, and the generation of an activation key;
- the download and installation of a specific application software, the so called App (121) inside the mobile device of said user;
- the enabling of said mobile device, by insertion of said activation key, to the service of intervention request in respect to a road accident and/or tracing of the driving profile with a related data transmission,

so that the process defines a communication between said user and said national Head-quarter according to three possible modes - text mode, voice mode, digital data mode; and the process allows the transmission to the national Head-quarter of data related to the motion and location of said vehicle, in order to trace a user's driving profile and/or to activate an automatic *warning* towards said national Head-quarter, in respect to the occurring of a road accident.

3. Process supporting the acquisition, registration and transmission, by a mobile device, of data related to the motion of a vehicle, to the geolocation and to the driving behaviours, according to previous claim 2, said process **characterized in that** comprising the following steps:

- a processing unit provides a high frequency sampling of the acceleration detected by the three-axis accelerometer installed within said mobile device;

- the data detected with reference to location and velocity is obtained by the satellite GPS network, and in particular the velocity is detected by considering the different detected locations at different times;
- the data is saved in so called warning packets, and sent to the national Head-quarter according to the following possibilities:

a) when the user requires the intervention by pushing one of the three buttons related to one of the three possible modes (text mode, voice mode, digital data mode), according to the subscription of the so called Service Card ®;
b) automatically, when a critical deceleration threshold has been reached, that is a specific value beyond beyond which it is highly possible that a crash has occurred; in case that an increase of velocity is not detected within 60 seconds after the detection of said deceleration, then the algorithm embedded through the App enables the automatic transmission of data; said data is sent through the telecommunication network and reach the national Head-quarter, that contacts the user by phone and organizes the intervention on site if necessary;
c) automatically, when more that 60 minutes are past from the previous transmission provided by a *cyclic buffer*;
d) automatically, at regular time, in order to define said driving profile.

4. Process supporting the acquisition, registration and transmission, by a mobile device, of data related to the motion of a vehicle, to the geolocation and to the driving behaviours, according to previous claim 3, said process **characterized in that**:

- the user can select the activation of the data saving mode, useful to reconstruct the driving profile on the long term, that is a history data related to the behaviour of the driver of the vehicle;
- the data related to the tracing of said driving profile is generated at regular time and sent through a *cyclic buffer* to said server or central database.

5. Process supporting the acquisition, registration and transmission, by a mobile device, of data related to the motion of a vehicle, to the geolocation and to the driving behaviours, according to one or more of previous claims from 2 to 4, said process **characterized in that**:

- when a car accident occurs, the algorithm embedded by the software provides the automatic warning and the activation of a virtual assistant that contacts the user and asks "Do you need any help ?";
- if the answer is YES, or there is no answer in example because the user being senseless, then the algorithm provides the immediate communication of a warning to the national Head-quarter, that immediately sends an operator to the site of the accident;
- if the answer is NO, then the same algorithm closes the request without any intervention by said operators.

6.  Process supporting the acquisition, registration and transmission, by a mobile device, of data related to the motion of a vehicle, to the geolocation and to the driving behaviours, according to one or more of previous claims from 2 to 5, said process **characterized in that**:

> - there is a unique association between said mobile device (131) and a specific identification code;
> - the function of location trace of a person (133) provides the localization of the associated device, visualizing path and motion on a map (136); in particular, the data processing unit provides the processing of the GPS data coordinates, sent from the mobile device to be located, so that the *App* can visualize on the screen of the mobile device the position and the motion on the map;
> - an emergency request function (135) towards said national Head-quarter is further available, by using a virtual button (132) placed on the screen or just by making the mobile device to fall down to ground; in the latter case, the software detects the peak deceleration values detected by the accelerometer, that can occur exactly when the same device falls down to ground, and it is able to generate and send automatically a warning communication to said national Head-quarter, that contacts the user back (137) and if necessary sends an operator on site (139),

so that, according to a strategy of supporting a person and not only a car driver, said *App* can be associated to a specific person, like a woman, a child or a old person, and can be used therefore in order to communicate any problem to the national Head-quarter, including the tracing of the person's position.

7.  Process supporting the acquisition, registration and transmission, by a mobile device, of data related to the motion of a vehicle, to the geolocation and to the driving behaviours, according to one or more of previous claims from 2 to 6, said process **characterized in that**:

> - when a road accident is detected, the algorithm provides the automatic communication of a warning to a national Head-quarter;
> - a chat module is open automatically (128) in order to provide a real time communication with said national Head-quarter by using *internet*;
> - the national Head-quarter checks with the user the need of a possible support and the intervention of an operator on site,

so that it is possible to access to any function by a graphic interface, and therefore the *App* can be used by hearing impaired people.

8.  Process supporting the acquisition, registration and transmission, by a mobile device, of data related to the motion of a vehicle, to the geolocation and to the driving behaviours, according to one or more of previous claims from 2 to 7, said process **characterized in that** comprising the following steps:

> - saving of a keyword (141), by using a microphone connected to a voice recognition device, able to encode a profile of voice and said word, saving data in a database contained inside the memory of said mobile device;
> - an algorithm embedded in the same *App* detects voice and said words with a high frequency and by using the same microphone installed on said mobile device, providing a matching of previously saved data inside said database;
> - in case of positive matching, the following operation provides an audio/video communication (145) and a geolocation of said device (146) towards said national Head-quarter,

so that a prompt reaction of the operators working in the national Head-quarter can be provided, either in case of the user being attacked, and the situation can be immediately checked and the intervention of the Police can be requested, at the same time the multimedia contents (audio and video) sent during the emergency are geolocated and saved in a central database, providing a further use as a evidence of what happened.

9.  Process supporting the acquisition, registration and transmission, by a mobile device, of data related to the motion of a vehicle, to the geolocation and to the driving behaviours, according to one or more of previous claims from 2 to 8, said process **characterized in that**:

> - a specific algorithm, detecting a real time position of the vehicle by the GPS coordinates and receiving, by a continuous internet connection, information about part of roads particularly dangerous, checks said information with the current position permitting to warning the driver of the vehicle, by acoustic and visual signals, the arriving to places **characterized by** a high frequency of accident,

so that the level of attention and concentration in the driver of the vehicle can be increased in order to avoid possible new accidents.

100

102

103

101

106

112

113 114

108

104

107

105

**Fig. 1**

160

Sicurezza e Ambiente

La sicurezza delle strade e la tutela del territorio

161

Wire telephone

Mobile phone

Email

Insurance company

Insurance number

Vehicle number

162

**Fig. 2**

170

SA v.3.0

Enable driver trace — 174

Send text message — 171

Voice call — 172

Self certification — 173

Exit

**Fig. 3**

Start

**150**

NO — Check if acceleration > critical threshold **151**

YES

NO — Speed > 5 km/h **152**

YES

Waiting 10" **153**

Speed > 5 km/h **154**

YES

NO

Time < 50" **155**

NO — Warning activation **156**

YES

**Fig. 4**

**Fig. 5**

**Fig. 6**

Fig. 7

Registration on website — **120**

Download App — **121**

Voluntary request for help through chat or SMS — **122**

**123** — Voluntary request for help in case of health emergency, car accident or mechanical trouble

Smartphone detects the occurring of a car accident — **124**

Automatic activation of a warning to the operative Head-quarter — **125**

Open text chat — **126**

Open text chat — **127**

Chat module automatically opens for real time communication — **128**

NO — Does user need any help? — **129**

YES

The operative Head-quarter sends an operator on site — **130**

**Fig. 8**

Registration on website | **120**

Selection of
associated devices | **131**

Download App | **121**

Activation of emergency
function through button | **132**

**133** | Activation of function of
location trace of a person

Activation of emergency function
through smartphone falling down | **134**

Emergency warning to
the operative Head-quarter | **135**

**136** | Location of associated mobile
devices visualizing path and
motion on a map

Operative Head-quarter
contacts user | **137**

**138**

NO

Does user need
any help?

YES

The operative Head-quarter
sends an operator on site | **139**

**Fig. 9**

Registration on website **120**

Download App **121**

Warning sent voluntarily **140**

**141** Registration of a keyword for automatic warning activation

Intervention request for liquids spilling o car accident **142**

Automatic audio-video streaming activation **143**

**144** Warning activation through keyword

**145** Automatic audio-video streaming activation

Geolocation of the mobile device

**146**

**147** User is contacted by the operative Head-quarter in order to verify the situation

**148** Police intervention is requested by the operative Head-quarter

An operator is sent on site **149**

**Fig. 10**

Europäisches
Patentamt

European
Patent Office

Office européen
des brevets

**EUROPEAN SEARCH REPORT**

Application Number

EP 14 15 2574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/172017 A1 (RATTI CARLO FILIPPO [US] ET AL) 5 July 2012 (2012-07-05) * the whole document * ----- | 1-9 | INV. G06Q10/06 |
| X | EP 2 620 925 A1 (UNEMAR CLAES [SE]) 31 July 2013 (2013-07-31) * the whole document * ----- | 1-9 | |
| X | US 2012/322401 A1 (COLLINS LEE [US]) 20 December 2012 (2012-12-20) * the whole document * ----- | 1-9 | |
| X | GB 2 485 581 A (FMG SUPPORT LTD [GB]) 23 May 2012 (2012-05-23) * the whole document * ----- | 1-9 | |

TECHNICAL FIELDS
SEARCHED (IPC)

G06Q
H04M
G08B

The present search report has been drawn up for all claims

| Place of search | Date of completion of the search | Examiner |
|---|---|---|
| Munich | 26 January 2015 | Pastore, Edoardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 15 2574

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2015

| Patent document cited in search report | | Publication date | Patent family member(s) | | Publication date |
|---|---|---|---|---|---|
| US 2012172017 | A1 | 05-07-2012 | US 2012172017 A1<br>WO 2012094465 A2 | | 05-07-2012<br>12-07-2012 |
| EP 2620925 | A1 | 31-07-2013 | NONE | | |
| US 2012322401 | A1 | 20-12-2012 | NONE | | |
| GB 2485581 | A | 23-05-2012 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT RM20120611 A